**Europäisches Patentamt**

**European Patent Office**

**Office européen des brevets**

(19)

(11) Veröffentlichungsnummer: **0 040 839**
**A2**

(12)

# EUROPÄISCHE PATENTANMELDUNG

(21) Anmeldenummer: **81103956.9**

(22) Anmeldetag: **22.05.81**

(51) Int. Cl.³: **G 06 K 19/08**, G 08 G 1/12,
B 60 R 13/10, G 03 H 1/00,
G 06 K 7/10, G 06 K 1/12

(30) Priorität: **22.05.80 US 152512**

(43) Veröffentlichungstag der Anmeldung: **02.12.81**
**Patentblatt 81/48**

(84) Benannte Vertragsstaaten: **BE DE FR GB IT NL**

(71) Anmelder: **SIEMENS AKTIENGESELLSCHAFT Berlin**
**und München, Postfach 22 02 61,**
**D-8000 München 22 (DE)**

(72) Erfinder: **Rüll, Hartwig, Dr., Balduin-Helm-Strasse 49,**
**D-8080 Fürstensfeldbruck (DE)**

(54) **Identifikationssystem für Kraftfahrzeuge, Verfahren und Gerät zur Herstellung eines derartigen Systems und Verfahren und Gerät zur Wiedergabe einer in einem derartigen System enthaltenen kodierten Information.**

(57) Identifikationssystem für Kraftfahrzeuge, Verfahren und Gerät zur Herstellung eines derartigen Systems und Verfahren und Gerät zur Wiedergabe einer in einem derartigen System enthaltenen kodierten Information.

Es wird ein fälschungssicheres Identifikationssystem für Kraftfahrzeuge beschrieben, das ein Nummernschild (2) mit lesbarer Klarinformation aufweist. Zur Erhöhung der Fälschungssicherheit ist das Nummernschild zusätzlich Informationsträger einer mit dem bloßen Auge nicht entzifferbaren holografischen Information. Das Hologramm (8) enthält beispielsweise die alphanumerische Klarinformation des Nummernschildes (2) und kann zusätzliche Sicherungsinformationen enthalten. Das Hologramm (8) wird über einen Fourier-Prozessor mit einer Schreibeinrichtung in eine Grundplatte des Nummernschildes (2) oder eine auf die Grundplatte aufbringbare Folie eingeschrieben und die alphanumerische Klarinformation (4, 6) nachträglich eingeprägt. Das Hologramm kann auch auf einem gesonderten Informationsträger aufgebracht sein, der vom Nummernschild getrennt an dem betreffenden Kraftfahrzeug angebracht ist. Die im Hologramm enthaltene Information kann zusätzlich kodiert sein. Zur Wiedergabe der im Hologramm (8) gespeicherten Information wird dieses mit Laserlicht beleuchtet und die in der reflektierten Bildwelle enthaltene Hologramminformation in lesbare Klarinformation umgewandelt. Ein entsprechendes Gerät weist einen Laser und einen Bildwandler auf. Vorzugsweise wird mit für das Auge unschädlichem Infrarotlicht gearbeitet.

SIEMENS AKTIENGESELLSCHAFT    Unser Zeichen
Berlin und München            VPA 80 P 8218 E

0040839

Identifikationssystem für Kraftfahrzeuge, Verfahren
und Gerät zur Herstellung eines derartigen Systems
und Verfahren und Gerät zur Wiedergabe einer in einem
derartigen System enthaltenen kodierten Information

Die vorliegende Erfindung bezieht sich auf ein Identifikationssystem für Kraftfahrzeuge nach dem Oberbegriff des Patentanspruchs 1, auf ein Verfahren und Gerät zur Herstellung eines Identifikationssystems für Kraftfahrzeuge und auf ein Verfahren und Gerät zur Wiedergabe einer in einem Identifikationssystem für Kraftfahrzeuge enthaltenen kodierten Information.

Die Erfahrung hat gezeigt, daß Fahrzeuge, die von Terroristen und von Teilnehmern bei organisierten Verbrechen gestohlen werden, manchmal mit gefälschten oder umgeänderten Kraftfahrzeugskennungen oder Nummernschildern versehen und diese Fahrzeuge dann zur Ausführung von Verbrechen verwendet werden. Entweder werden gänzlich neu gefertigte Kraftfahrzeugskennungen oder modifizierte Kraftfahrzeugskennungen anderer Automobile benutzt. Um Verbrechern das Fälschen von Kraftfahrzeugskennungen zu erschweren, ist es notwendig, die Fahrzeugkennungen oder Schilder fälschungssicher zu machen, beispielsweise Fahrzeugkennungen gegen gesetzwidrige neue Herstellung und gesetzwidrige Änderung genehmigter Kennungen zu schützen. Es soll wenigstens möglich sein, leicht herauszufinden, ob eine Kraftfahrzeugkennung falsch ist oder nicht. Ein solches Erkennen soll auch möglich sein, wenn das betreffende Fahrzeug sich bewegt.

Ed 1 Sti/21.5.81

Bei den bisher benutzten Nummernschildern wird alphanumerische Information eingeprägt oder -graviert und
durch spezielle Färbung verdeutlicht, so daß sie klar
und mit dem bloßen Auge erkennbar ist. Derartige Schilder
sind relativ leicht zu ändern oder herzustellen, ohne
daß beträchtliche Kosten für Instrumentation erforderlich
wären. Im rollenden Verkehr können derartig gefälschte
oder falsche Nummernschilder wenn überhaupt, so doch
nur schwer entdeckt werden.

Die Aufgabe der vorliegenden Erfindung besteht darin,
ein Identifikationssystem für Kraftfahrzeuge der eingangs
genannten Art zu schaffen, das von einem Unbefugten
nicht geändert oder hergestellt werden kann, ohne daß
die unbefugte Änderung oder Herstellung leicht entdeckt
werden kann.

Diese Aufgabe wird durch die im kennzeichnenden Teil
des Patentanspruchs 1 angegebenen Merkmale gelöst.

Bevorzugte und vorteilhafte Ausführungsformen dieses
Systems gehen aus den Unteransprüchen 2 bis 12 hervor.

Es ist damit ein System geschaffen worden, dessen Echtheit auch im rollenden Verkehr geprüft werden kann.
Das gegen gesetzwidrige Neuherstellung gesicherte
System kann auch vom Fahrer des Kraftfahrzeugs weitgehend unbemerkt und aus der Entfernung auf seine
Echtheit geprüft werden.

Ein Verfahren und ein Gerät zur Erzeugung eines fälschungssicheren Identifikationssystems geht aus den
Ansprüchen 13 bzw. 18 hervor.

Bevorzugte Ausgestaltungen des Verfahrens gehen aus
den Unteransprüchen 14 bis 17 hervor.

Ein Verfahren und ein Gerät zur Wiedergabe von in einem
Identifikationssystem oder einer Identifikationseinrichtung gehen aus den Ansprüchen 19 bzw. 20 hervor.
Bevorzugte und vorteilhafte Ausführungsformen eines
Geräts gemäß Anspruch 20 gehen aus den Unteransprüchen
21 bis 24 hervor.

Demgemäß umfaßt ein Identifikationssystem oder
eine Identifikationseinrichtung für Kraftfahrzeuge erstens ein Kraftfahrzeugnummernschild, das
mit einer Klarinformation versehen ist, die mit dem
bloßen Auge erkennbar ist und die zur Identifizierung
des betreffenden Fahrzeugs dient, und zweitens einen
zusätzlichen Informationsträger, der an dem Nummernschild oder getrennt davon angebracht sein kann und
der eine kodierte Information enthält, die mit dem
bloßen Auge nicht entzifferbar ist.

Die grundlegende Idee der vorliegenden Erfindung liegt
darin, die technologischen und instrumentellen Kosten
für das Anbringen der zusätzlichen Information so hoch
zu machen, daß es praktisch unmöglich ist, das Identifikationssystem ohne Originalausrüstung zu imitieren
oder zu ändern. Demgemäß können Fälscher, die unbefugt
herstellen wollen, und die nur einfache Werkzeuge, wie
beispielsweise eine Gravier-, Stanz- oder Prägeeinrichtung zur Verfügung haben, ihr gesetzwidriges Gewerbe
nicht länger praktizieren.

In einer Ausführungsform ist das Nummernschild selbst
mit der kodierten Information zusammen mit der herkömmlichen, mit dem bloßen Auge erkennbaren und lesbaren alphanumerischen Information versehen. Diese
kodierte Information ist vorzugsweise so ausgebildet,
daß es möglich ist, diese Information schnell, unbemerkt und aus der Entfernung mit einer Spezialausrüstung
aufzurufen und zu lesen. Bei einer anderen Ausführungsform ist die kodierte Information auf einem speziellen Informationsträger in der Nähe des Nummernschildes vorgesehen.

Die kodierte Information kann beispielsweise die feine Struktur eines geeigneten Hologramms sein. Ein spezielles Hologramm in Form eines eindimensionalen oder linienhaften Kodes kann benutzt werden. Vorzugsweise erstreckt sich das Hologramm über das ganze Nummernschild. Insbesondere kann die Kombination der alphanumerischen Zeichen, die als Klarinformation auf dem Nummernschild sichtbar ist, in dem Hologramm gespeichert sein. Es kann auch zusätzliche Information in dem Hologramm gespeichert sein.

Das Hologramm ist vorzugsweise ein Infrarot-Hologramm, weil es dann ohne Gefahr für das menschliche Auge mit einem Infrarot-Laser gelesen werden kann. Ein geeigneter Leselaser ist ein $CO_2$-Laser.

Ein Identifikationssystem oder eine Identifikationseinrichtung für Kraftfahrzeuge der oben genannten Art kann folgendermaßen hergestellt werden:
Zuerst wird eine Fläche einer Basisplatte wenigstens teilweise mit einer kodierten, vorzugsweise holografischen Information versehen und dann wird die erwähnte Klarinformation in die Basisplatte in der Weise eingebracht, daß die Basisplatte ein Kraftfahrzeugnummernschild bildet.

Ein etwas anderes Identifikationssystem für Kraftfahrzeuge kann mit dem folgenden Verfahren hergestellt werden:
Auf einem regulären Kraftfahrzeugnummernschild, das mit einer zur Identifizierung des betreffenden Automobils dienenden und mit dem bloßen Auge wahrnehmbaren Klarinformation versehen ist, wird eine dünne Folie
aufgebracht, die eine kodierte, vorzugsweise holografische Information enthält. Die Folie kann aus
einem Material bestehen, das leicht reißt, wenn der
Versuch gemacht wird, die Folie von dem Nummernschild
zu entfernen.

Die Wiedergabe der in einem Identifikationssystem
oder einer Identifikationseinrichtung für Kraftfahrzeuge enthalten ist und die Überprüfung der Echtheit
der Fahrzeugkennung kann folgendermaßen bewirkt werden,
wenn die kodierte Information aus einem Hologramm
besteht:
Der mit dem Hologramm versehene Informationsträger
wird von einem Leselaser mit einem Laserstrahl geeigneter Wellenlänge und Strahlgeometrie, beispielsweise von einem $CO_2$-Laser beleuchtet. Das Laserlicht
wird von dem Informationsträger, beispielsweise das
Nummernschild, teilweise reflektiert. In den reflektierten Anteil des Laserlichts ist die in dem Hologramm
enthaltene kodierte Information eingeprägt (räumliche
Modulation). Ein Anteil der reflektierten Bildwelle
wird von einem Sensor empfangen und kann in einem
Bildwandler in ein Bild umgewandelt werden, welches
visuell ausgewertet werden kann.

Wenn eine Ausführungsform gewählt worden ist, bei der
die kodierte Information gleich der Klarinformation
auf der Fahrzeugkennung ist, und wenn die holografisch
rekonstruierte Information des Bildes mit der Klarinformation identisch ist, wird das Nummernschild als
echt betrachtet und wenn nicht, als gefälscht.

Wenn andererseits eine Ausführungsform gewählt worden
ist, bei der nur eine Kodenummer oder eine andere Kodeinformation in dem Hologramm in kodierter Form gespeichert
ist, wird diese Kodenummer bei der Überprüfung durch

0040839

einer Justizbeamten per Radio in eine zentrale Station,. beispielsweise eines Polizeibezirks, übermittelt. Daraufhin erhält der Prüfbeamte die zugehörige Fahrzeugnummer und/oder zusätzliche Daten, die unter dieser Kodenummer oder Kodeinformation zusammengefaßt und gespeichert sind. .

Es sei betont, daß die holografisch zu speichernde Information beim Einbringen in das Nummernschild, beispielsweise die Basisplatte oder Folie, zusätzlich kodiert werden. kann. Dies kann durch sogenannte optische Verwürfelung (optical scrambling) bewirkt werden. Das rekonstruierte Wellenfeld kann nur ausgewertet, beispielsweise leserlich, dargestellt werden, nachdem in dem Empfänger eine Dekodierung stattgefunden hat.

Bevorzugte Ausführungsbeispiele der Erfindung werden anhand der Figuren in der folgenden Beschreibung näher erläutert. Von den Figuren zeigen:

Figur 1 eine Draufsicht auf ein Kraftfahrzeugnummerschild, auf dem gleichzeitig eine visuelle und eine holografische Information gespeichert sind,

Figuren 2a, b und c Querschnitte durch Teile eines Kraftfahrzeugnummernschildes, die ein erstes Verfahren zur Herstellung des Schildes darstellen,

Figuren 3a, b und c Querschnitte durch Teile eines Kraftfahrzeugnummernschildes, die ein zweites Verfahren zur Herstellung der Platte illustrieren,

Figuren 4a, b und c Querschnitte durch Teile eines Kraftfahrzeugnummernschildes, die ein drittes Verfahren zur Herstellung des Schildes
illustrieren,

Figuren 5 und 6 Ansichten eines Automobils, aus denen
hervorgeht, wo die zusätzliche holografische
Information angeordnet werden kann,

Figur 7 eine Einrichtung zur Erzeugung eines Nummernschildes, die eine Eintragung einer Buchstaben-Nummern-Kombination in alphanumerischer
und holografischer Form aufweist,

Figur 8 eine Seitenansicht einer Prüfeinrichtung,
die das Nummernschild eines Automobils überprüft,

Figur 9 eine perspektivische Ansicht einer Prüfeinrichtung gemäß Figur 8,

Figur 10 eine mehr ins Detail gehende Zeichnung einer
ersten Prüfeinrichtung gemäß Figur 8 und

Figur 11 eine mehr ins Detail gehende Zeichnung
einer zweiten Prüfeinrichtung gemäß Figur 8.

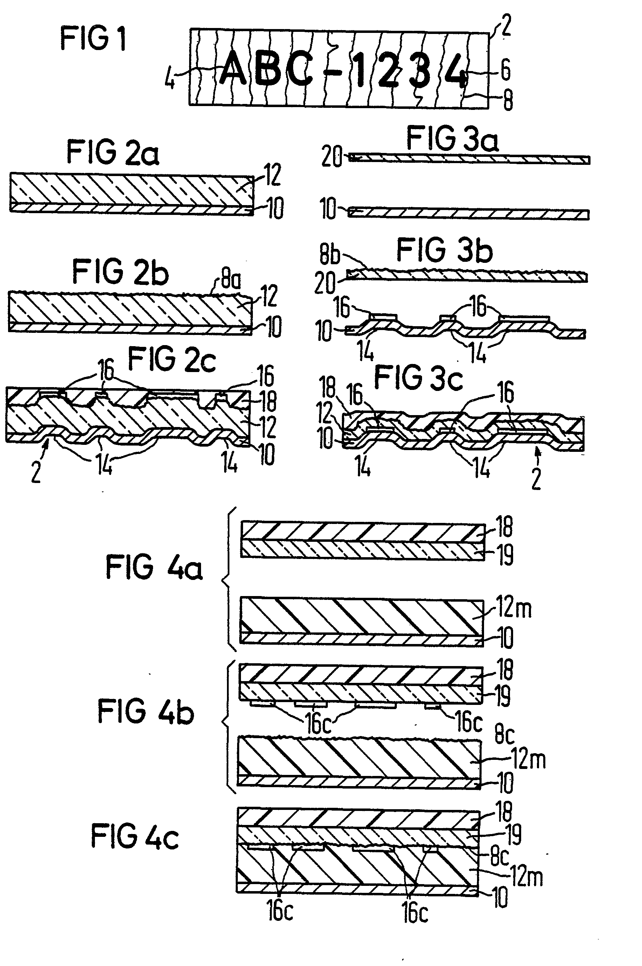

Die Figur 1 zeigt ein Nummernschild 2, welches eine leicht entzifferbare oder begreifliche alphanumerische Information, die durch eine Buchstabenkombination 4 und eine Ziffernkombination 6, beispielsweise durch eine Gesamtkombination ABC-1234 sowie zusätzlich durch ein mittels Wellenlinien wiedergegebenes holografisches Muster bzw. eine holografische Information 8 dargestellt ist. Die alphanumerische Information tritt anstelle der Zulassung, die gewöhnlich einem Automobil oder Fahrzeug zum Zwecke der Identifizierung zugeteilt wird. Die holografisch gespeicherte Information 8 ist ohne spezielle Gerätschaft für das menschliche Auge unsichtbar und unentzifferbar. Das holografische Muster 8 kann insbesondere ein Infrarothologramm sein.

Die in dem holografische Muster enthaltene Information ist für das bloße menschliche Auge kodiert. Sie kann die Kombination ABC-1234 dieses alphanumerischen Symbols,das als Klarinformation auf dem Nummernschild 2 sichtbar ist, aufweisen. Im Unterschied dazu oder zusätzlich kann das holografische Muster 8 andere Information enthalten, beispielsweise den Namen des rechtmäßigen Fahrzeugeigentümers oder die Farbe des Fahrzeugs. Alternativ dazu kann in dem Muster 8 einfach eine Kodenummer gespeichert sein, welche bei der Überprüfung der Fahrzeugidentität zu einer zentralen Station durchgegeben wird, beispielsweise einem Polizeibezirk. Dort werden beispielsweise in einem Rechner unter dieser Kodenummer abgespeicherten Daten abgerufen und dem Prüfbeamten zum Vergleich übermittelt. Ein holografisches Muster 8 ist eine komplexe Struktur und ist für einen Unbefugten schwer zu wechseln oder zu imitieren.

Die Figuren 2, 3 und 4 zeigen, daß das Nummernschild 2 durch verschiedene Verfahren hergestellt werden kann.

Gemäß Figur 2a wird eine Basisplatte 10 aus solidem Kunststoff oder vorzugsweise aus Metall auf seiner Oberfläche mit einem Material 12 bedeckt oder überzogen, welches für das Licht des später benutzten Meß- oder Leselasers transparent ist. Dieses Material 12 kann insbesondere ein synthetisches Harz oder ein synthetischer Kunststoff sein, das oder der in einer dünnen Schicht aufgebracht wird. Gemäß Figur 2b wird in die Oberfläche des Materials 12 ein holografisches Muster 8a eingraviert.

Dieses Muster 8a enthält seinerseits Information in einer kodierten Form. Nachdem das holografische Muster 8a eingebracht worden ist, wird die Basisplatte 10 in der herkömmlichen Weise geprägt oder graviert, beispielsweise wird die alphanumerische Information ABC-1234 eingedrückt. Dies kann den eingedrückten Stellen 14 in der Figur 2c eintnommen werden. Aufgrund dieser Eindrücke 14 sind auf der Oberfläche des Materials 12 Erhebungen, die mit einem Anstrich 16 gefärbt werden können, so daß die Information ABC-1234 sich deutlicher vom Hintergrund abhebt. Bei Benutzung eines IR-Hologramms 8a kann der Anstrich IR-transparent sein. Er muß jedoch nicht notwendig IR-transparent sein, weil die holografische Information auch von den ungefärbten Flächenbereichen des Materials 12 rekonstruiert werden kann. Die Oberfläche des Materials 12 kann auch mit einem Schutzüberzug 18 versehen werden, um die holografische Information vor mechanischer Beschädigung und Wettereinflüssen zu schützen. Die Außenfläche kann dadurch glatt und eben ausgebildet sein.

Gemäß Figur 3a ist wieder eine Basisplatte aus Kunststoff oder vorzugsweise Metall vorgesehen. Gleichzeitig

ist eine flexible Folie 20 vorgesehen. Diese Folie 20 kann aus Kunststoff bestehen. Gemäß Figur 3b ist in die metallische Basisplatte 10 in der herkömmlichen Weise das Zulassungszeichen ABC-1234 des Fahrzeugs eingraviert und mit einem Anstrich 16 versehen. Die Eindrücke sind wieder mit 14 bezeichnet. Die Oberfläche der Folie 20 ist mit einem holografischen Muster 8b versehen. Dieses kann eingraviert oder eingeprägt sein. Das holografische Muster 8b kann vorzugsweise wieder ein IR-Hologramm sein. Wie es aus der Figur 3c offensichtlich hervorgeht, wird die Folie 20 dann auf die metallische Basisplatte 10 aufgebracht. Das holografische Muster 8b kann der gefärbten Fläche der Basisplatte 10 zugewandt oder von dieser abgewandt sein. Das Aufbringen der Folie 20 kann auch durch Kleben bewirkt werden. In diesem Fall ist die Folie 20 selbstklebend oder -haftend ausgebildet. Während des Aufklebens paßt sich die Folie 20 von selbst den Einprägungen in der Basisplatte 10 an. Die Folie 20 kann insbesondere aus einem solchen Material sein, daß beim Versuch, es zu entfernen, reißt. Darüber hinaus sollte es für wenigstens einen großen Bereich des sichtbaren Lichts transparent sein, so daß die gefärbte Klarinformation ABC-1234 leicht auf dem Hintergrund (Basisplatte 10) erkennbar ist. Schließlich kann auch hier eine äußere Schutzschicht 18 vorgesehen sein, beispielsweise wieder in Form einer transparenten Folie. Im allgemeinen ist jedoch eine solche Schutzschicht nicht erforderlich.

In der Figur 4 ist eine andere Möglichkeit gezeigt, bei der keine Einprägungen vorgenommen werden müssen.

0040839

Gemäß Figur 4a werden als Startmaterial zwei verschiedene Schichtblöcke vorbereitet. Der obere Schichtblock enthält eine Schichtplatte 19, die später mit der Klarsichtinformation versehen wird, sowie einen darauf aufgebrachten äußeren Schutzüberzug 18. Der untere Schichtblock enthält eine Basisplatte 10 als ein Substrat, auf das ein Trägermaterial 12m für ein IR-Hologramm aufgebracht ist.

Gemäß Figur 4b wird die untere Seite der Schichtplatte 19 mit alphanumerischen Klardaten 16c versehen. Dies kann durch Aufdrucken, Sprühen, Kleben, Eingravieren usw. ausgeführt werden. Die Oberseite des Trägermaterials 12m ist mit holografischer Information 8c versehen.

Dann werden gemäß Figur 4c die beiden Schichtblöcke gemäß Figur 4b untrennbar miteinander verbunden. Die untere Seite des oberen Blocks wird mit der Oberseite des unteren Blocks verbunden. Dies kann durch Verkleben oder Verschweißen ausgeführt werden. Die wichtige Information, nämlich die Klardaten 16c und die holografische Information 8c wird dadurch wirksam im Inneren des Motorfahrzeug -Identifikationsmittels geschützt.

Die Schichten 18 und 19 sind aus IR-transparentem Material gefertigt und das Trägermaterial 12m weist einen hohen Reflexionskoeffizienten für IR-Licht auf.

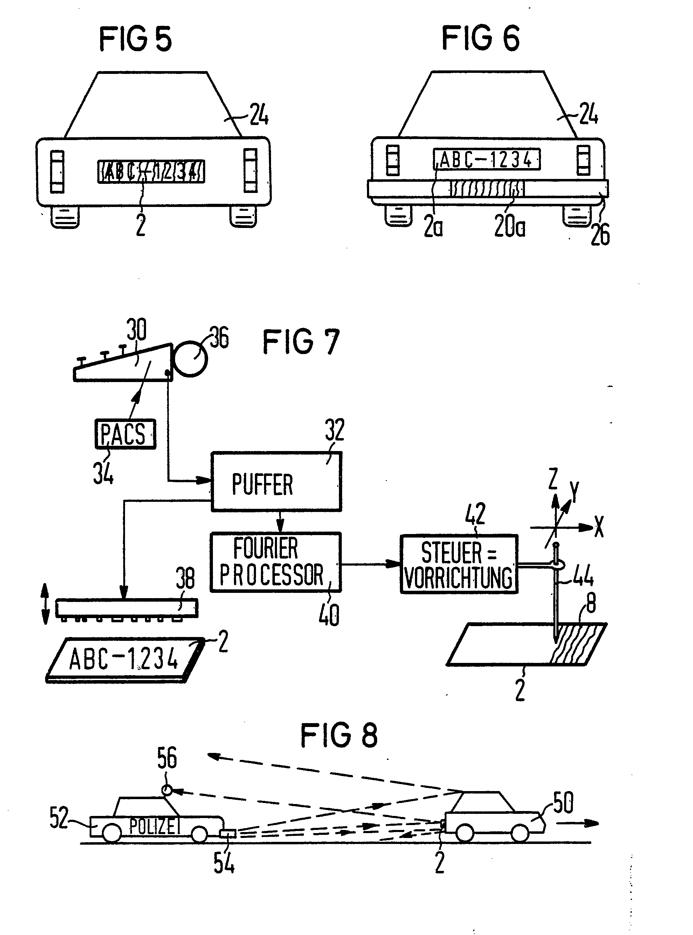

Gemäß Figur 5 kann das Nummernschild 2, das sowohl eine klare Information ABC-1234 als auch eine kodierte holografische Information enthält, an einem Personenwagen 24 befestigt oder angebracht werden.

Gemäß Figur 6 sind für die Klarinformation und die zusätzliche holografische Information verschiedene Informationsträger vorgesehen. Die Klarinformation

ABC-1234 kann in einem gewöhnlichen Nummernschild 2a enthalten sein, während die zusätzliche holografische Information in einer dünnen Folie 20a gespeichert ist, welche an einer anderen Stelle des Wagens 24 angeordnet ist. Die Herstellung der Folie 20a erfordert eine gewisse Aperatur. Die Folie 20a kann deshalb nicht leicht nachgeahmt oder imitiert werden. Sie kann an der Stoßstange 26 angebracht, insbesondere aufgeklebt werden. Ähnlich wie die Folie 20 in Figur 2 kann sie aus einem solchen Material bestehen, welches beim Entfernen von der Stoßstange 26 reißt. Dadurch ist die Folie 20a gegen Diebstahl gesichert. Deshalb sind gemäß Figur 6 das Nummernschild 2a, das die alphanumerische Klarinformation enthält und die Folie 20a oder der Klebestreifen mit der nicht leicht zugänglichen holografischen Information an verschiedenen Stellen des Wagens 24 angebracht oder befestigt.

In Figur 7 ist ein Gerät zur Erzeugung eines vorgeschlagenen Nummernschildes dargestellt. In diesem Gerät oder System ist die als Klarinformation auf dem Nummernschild 2 sichtbare Information ABC-1234 auch in holografisch kodierter Form auf dem Nummernschild 2 vorgesehen.

Die Kombination ABC-1234 der alphanumerischen Zeichen wird über ein Tastenfeld einer Eingabevorrichtung 30 in einen Pufferspeicher 32 eingegeben. Zur Vermeidung von Mißbrauch wird die Befugnis zum Zugang zum Schilderherstellungsapparat jedesmal geprüft, bevor er in Tätigkeit gesetzt wird. Die Überprüfung kann in bekannter Weise auf der Basis personenspezifischer Eigenschaften, wie beispielsweise Stimme, Fingerabdruck, Unterschrift od. dgl. bewirkt werden.

Demgemäß ist mit der Eingabevorrichtung 30 ein
Personenzugangs-Kontrollsystem (PACS) 34 verbunden.
Das Kontrollsystem 34 stellt sicher, daß nur befugte
Personen den  dargestellten Herstellungsapparat betätigen können.

Aus der Eingabevorrichtung 30, die zudem mit einem
Protokolldrucker 36 versehen sein kann, wird die eingegebene Information in den Pufferspeicher 32 gegeben
und gelangt von dort in eine Präge- oder Gravierungsvorrichtung 38 und in einen Fourier-Prozessor 40.

In dem Fourier-Prozessor 40 wird die Hologrammstruktur berechnet, die während aufeinanderfolgender
Überprüfungen des Nummernschildes des Wagens die
alphanumerischen Zeichen durch Beleuchtung mit
einem geeigneten Laserstrahl rekonstruiert. Die
Methode, eine Hologrammstruktur mittels eines
Rechners zu berechnen, die sogenannte schnelle
Fourier-Transformation, ist in der holografischen
Technik wohl bekannt. Sie wurde durch A. Lohmann
et al entwickelt (siehe dazu (1) "Binary Fraunhofer
Holograms, Generated by Computer", Appl. Optics, Vol.6,
(1967) S. 1739 ff, (2) "Computer-Generated Binary
Holograms", IBM Journal of Research and Development,
Vol. 13 (1969) S. 160, (3) "How to Make Computer-
Holograms", Proceeding of the SPIE Seminar, Vol. 25,
S. 43-49, ed. B.J. Thomson und J.B. Develis, ein
in der "Holographie 71" Boston, April 1971, vorgelegtes
Papier. Eine Zusammenfassung ist in "Holografie"
durch Gunter Groh, Verlag Berliner Union GMBH,
Stuttgart, S. 110 - 117 veröffentlicht worden.)

Bei der Berechnung wird in Betracht gezogen, daß
das Hologramm vorzugsweise ebensogroß ist wie das
ganze Nummernschild. Die Hologrammstruktur ist, wie
schon erwähnt, vorzugsweise als Fourier-Hologramm ausgebildet. Andere bekannte Hologrammstrukturen sind ebenfalls möglich. Die Gründe, warum einem Fourier-Hologramm der Vorzug gegeben wird, sind folgende:

a) Die Berechnung des Hologramms kann relativ leicht ausgeführt werden.

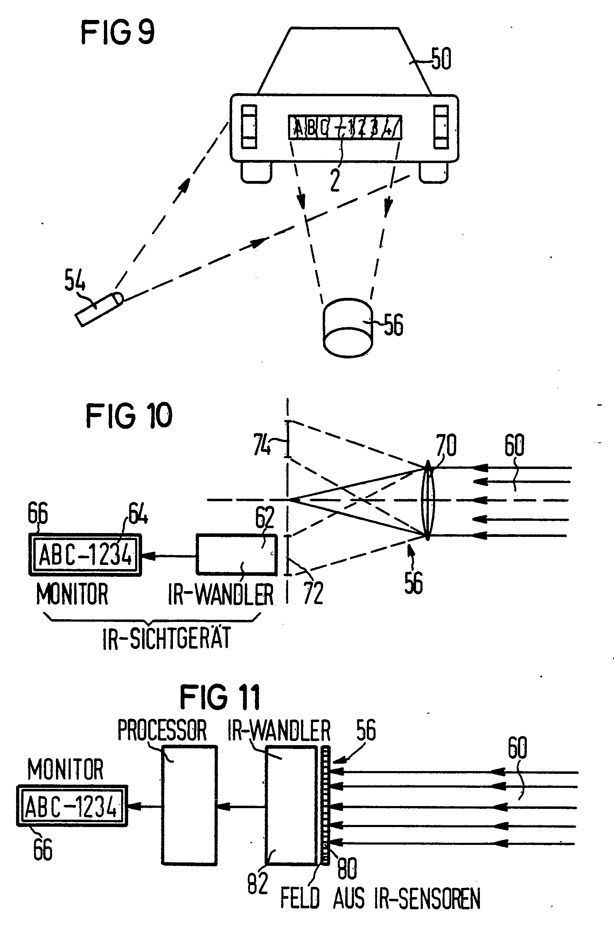

b) Die Translationsinvarianz der Fourier-Hologramme kann erfolgreich dazu benutzt werden, das Prüfverfahren besonders einfach zu gestalten. Das bedeutet, daß die Prüfung vom bewegten Fahrzeug (siehe Figur 8) durchgeführt werden kann, weil seitliche Bewegungen des zu prüfenden Fahrzeugs (d.h. Bewegungen senkrecht zu seiner Bewegungsrichtung) und des Nummernschildes in dem Empfänger (vergleiche Figuren 10 und 11) beim Prüfen in der Fanrtrichtung nicht zu seitlichen Bewegungen und Wanderungen des rekonstruierten Bildes führen. Bewegungen in der Fahrtrichtung des zu prüfenden Fahrzeugs sind wegen der großen Tiefenschärfe kein Problem. Daneben ist auch bei der Rekonstruktion keine besonders große Auflösung erforderlich.

Bei der Berechnung des Fourierhologramms sollten vorzugsweise Algorithmen verwendet werden, die beim Auslesen des Hologramms zu einem Bild mit möglichst hohem Signal-Rausch-Verhältnis führen. Derartige Algorithmen sind in der Literatur von H. Lohmann et al veröffentlicht worden, beispielsweise in den drei oben erwähnten Artikeln und in (4) "Complex Special Filtering With Binary Masks" Appl. Optics, Vol. 5, Nr. 6, Juni 1966, S. 967-969 und (5) "Digital Holographie", Proceedings IEEE, Vol. 59, Nr. 9, Sept. 1971, S. 1335-1345.

-15-    VPA 80 P 8218  E

Nachdem das Fourier-Hologramm berechnet worden ist, wird diese Information in eine Steuervorrichtung 42 eingegeben, die zum Steuern.eines einen Schreibstift aufweisenden Schreibgeräts 44 vorgesehen ist. Die Steuervorrichtung 42 steuert die Bewegung des Schreibstiftes in den Richtungen der Koordinaten x, y, z, die aufeinander senkrecht stehen. Der Schreibstift schreibt oder graviert die Struktur des Fourier-Hologramms auf oder in die Oberfläche der Nummernschilder (siehe auch Figuren 2b und 3b), welche Oberfläche die eines aufgebrachten Materialüberzugs12 bzw. einer Folie 20 ist.

Die Erzeugung oder das Einschreiben des Hologramms kann auch mittels eines fokussierten Laserstrahles bewirkt werden.

Die Steuervorrichtung 42 und das Graviergerät 44 mit dem Schreibstift sind in der Technik der Holografie perse bekannt, beispielsweise werden sie beim Stand der Technik zur Erzeugung von Identifizierungskarten benutzt, die eine Hologrammstruktur aufweisen. Derartige Vorrichtungen 42 oder 44 können zum gegenwärtigen Zeitpunkt auch verwendet werden, wenn das Hologramm ein IR-Hologramm ist. Ein Schreibgerät zur Erzeugung von Kennkarten ist beispielsweise im Handel als "Identograf K 140" von Dr. Rudolf Hell GmbH, Kiel oder als "Identograf K 141" von R. Oldenburg, Grafische Betriebe GmbH, München erhältlich.

Nachdem das Hologramm eingeschrieben oder graviert worden ist, wird die Klarinformation ABC-1234 in herkömmlicher Weise in das Nummernschild 2 eingeprägt oder -gedrückt (siehe Vertiefungen 14 in den Figuren 2c und 3c).

Zum Einprägen der visuell wahrnehmbaren Klarinformation dient die Prägeeinrichtung 38.

Es sei noch einmal betont, daß die erhabenen Bereiche des Nummernschildes 2 nach der Prägung in der Prägeeinrichtung 38 mit Farbe 16 koloriert werden können, z.B. mit einer in der Figur 7 nicht dargestellten Färbeeinrichtung. Das Nummernschild 2 kann dann auch mit einem Schutzüberzug 18 versehen werden. Die Farbe 16 und der Schutzüberzug 18 sind vorzugsweise transparent für IR-Licht. Aus der Figur 8 geht hervor, wie das Nummernschild 2 eines Automobils 50 geprüft wird. Ein Polizeifahrzeug 52 ist mit einem Lese- oder Meßlaser 54, vorzugsweise ein IR-Laser, und einem Empfänger 56 ausgestattet. Der Meßlaser 54 kann insbesondere ein $CO_2$-Laser sein. Die Vorteile eines IR-Lasers sind die folgenden:

a) der Laserstrahl ist für das menschliche Auge -unsichtbar und unschädlich. Passanten sind folglich vor einer gefährlichen Lichtstrahlung geschützt;

b) das Prüfen des Automobils 50 kann bewirkt werden, ohne daß der Fahrer, ein Mitfahrer oder ein Passant es bemerken;

c) es ist möglich, über eine relativ große Distanz zu prüfen;

d) das Automobil kann auch während der Fahrt geprüft werden.

Im Infraroten bei der Wellenlänge 10,06 Mikron strahlende $CO_2$-Laser mit hoher Strahlungsintensität sind im Handel leicht erhältlich. Sie sind sehr wirkungsvoll und können sehr klein und kompakt gebaut werden.

Abweichend von der Figur 8 kann der prüfende Beamte das Nummernschild 2 auch mit dem Fadenkreuz eines Feldstechers aufnehmen. Der Meßlaser 54, der mit dem Feldstecher verbunden sein kann, ist dann automatisch auf das Ziel, d.h. das Nummernschild des Fahrzeugs 50, gerichtet.

In der Figur 9 ist der Prüfvorgang noch einmal perspektivisch dargestellt. Der Laser 54 und der Empfänger 56 sind hier nebeneinander angeordnet. Sie können ebensogut übereinander angeordnet sein.

In den Figuren 10 und 11 sind zwei verschiedene Empfängereinrichtungen 56 dargestellt, die beim Prüfen eines Fahrzeugs 50 verwendet werden können. Die Empfängereinrichtungen 56 sind Apparate zur Wiedergewinnung kodierter Informationen. Beide basieren auf den folgenden Prinzipien: Der Meßlaser 54 bestrahlt das Nummernschild 2, die reflektierte Bildwelle 60 wird von einem IR-Bildwandler 62 empfangen und wird in eine Bildinformation 54 umgewandelt, welche von einem Beobachter auf einem Monitor 66 visuell wahrgenommen werden kann.

Zur Wiedergewinnung der holografisch kodierten Information ist es notwendig, eine umgekehrte Fourier-Transformation auszuführen. Dies kann mit einem optischen Fourier-System (siehe Figur 10) oder mit segmentierten Sensormatrizen und einem nachgeschalteten Fourier-Prozessor (Siehe Figur 11) ausgeführt werden.

Gemäß Figur 10 trifft die reflektierte IR-Bildwelle 60 in dem Empfänger 56 auf eine IR-Linse 70. Eine derartige IR-oder Infrarotlinse 70 ist ein wohl bekanntes im Handel erhältliches Produkt. Wie es aus der Holografietechnik bekannt ist, erzeugt das Fourierlinsensystem zwei Bilder, ein direktes Bild 72 und ein konjugiertes Bild 74. Eines der beiden, im vorliegenden Fall das direkte Bild 72, wird für die rekonstruktion der kodierten Information verwendet. Es wird von dem IR-Bildwandler 62 empfangen und wird dort elektronisch in die auf dem Monitor 66 sichtbare Bildinformation ABC-1234 umgewandelt. IR-Bildwandler 62 und Monitor 66 sind im Handel erhältlich, beispielsweise als IR-Sichtgeräte oder IR-Betrachter.

Gemäß Figur 11 trifft die Bildwelle 60 auf eine IR-Sensormatrix 80. Dieser Sensormatrix 80 ist ein IR-Bildwandler 82 mit einem Fourier-Prozessor 84 nachgeschaltet. IR-Direktoren in der Matrixanordnung sind im Handel erhältlich, beispielsweise vom Santa Barbara Research Center, Goleta, Kalifornien 93017.

Die empfangende und bildwandelnde Einrichtung 56 kann insbesondere tragbar ausgebildet sein.

24 Patentansprüche
11 Figuren

Patentansprüche

1. Identifikationssystem zum Identifizieren von Kraftfahrzeugen, welches ein Kraftfahrzeug-Nummernschild aufweist, das mit einer zur Identifizierung des Kraftfahrzeugs dienenden Klarinformation versehen ist, die mit bloßem Auge lesbar ist, dadurch gekennzeichnet, daß zusätzlich ein Informationsträger ( 2, 20a) vorgesehen ist, der eine mit bloßem Auge nicht dekodierbare kodierte Information enthält und der an dem Kraftfahrzeug (24, 50) anbringbar ist.

2. Identifikationssystem nach Anspruch 1, dadurch gekennzeichnet, daß der zusätzliche Informationsträger (20a) in der Nähe des Nummernschildes (2) angebracht ist.

3. Identifikationssystem nach Anspruch 1 oder 2, dadurch gekennzeichnet, daß der zusätzliche Informationsträger (20a) mit dem Nummernschild (2) eine strukturelle Einheit bildet.

4. Identifikationssystem nach einem der vorhergehenden Ansprüche, dadurch gekennzeichnet, daß die kodierte Information des zusätzlichen Informationsträgers ( 20a) mit der Klarinformation des Nummernschildes (2) identisch ist.

5. Identifikationssystem nach einem der vorhergehenden Ansprüche, dadurch gekennzeichnet, daß die kodierte Information neben der Klarinformation des Nummernschildes (2) eine Zusatzinformation enthält.

6. Identifikationssystem nach Anspruch 3, dadurch gekennzeichnet, daß die kodierte Information wenigstens über den größten Teil des Nummernschildes (2) verteilt ist.

7. Identifikationssystem nach einem der vorhergehenden Ansprüche, d a d u r c h   g e k e n n z e i c h n e t , daß die kodierte Information des zusätzlichen Informationsträgers ( 20a   ) aus einem Hologramm besteht.

8. Identifikationssystem nach Anspruch 7, d a d u r c h   g e k e n n z e i c h n e t , daß das Hologramm (8) aus einem Infrarothologramm besteht.

9. Identifikationssystem nach Anspruch 3 oder nach diesem Anspruch und einem der Ansprüche 4 bis 8, d a d u r c h   g e k e n n z e i c h n e t ., daß eine Basisplatte (10, 12) vorgesehen ist, in einer deren Flächen die kodierte Information (8) eingraviert ist und in welche Platte die Klarinformation in alphanumerischer Form eingraviert ist.

10. Identifikationssystem nach Anspruch 3 oder nach Anspruch 3 und einem der Ansprüche 4 bis 9, d a - d u r c h   g e k e n n z e i c h n e t , daß eine Basisplatte (10) vorgesehen ist, welche eine Fläche aufweist, in welcher die Klarinformation in alphanumerischer Form in diese Platte eingeprägt ist, und daß auf die Fläche der Basisplatte (10) eine dünne Folie (12) aufgebracht ist, welche die kodierte Information enthält.

11. Identifikationssystem nach Anspruch 2 oder nach Anspruch 2 und einem der Ansprüche 3 bis 10, d a - d u r c h   g e k e n n z e i c h n e t ,daß der zusätzliche Informationsträger (20a) an der Stoßstange (26) des Kraftfahrzeugs (24) angebracht ist.

12. Identifikationssystem nach einem der vorhergehenden Ansprüche, d a d u r c h  g e k e n n z e i c h n e t , daß der zusätzliche Informationsträger (2, 20a ) mit einem Schutzüberzug (18) versehen ist.

13. Verfahren zur Erzeugung eines Identifikationssystems für Kraftfahrzeuge, d a d u r c h  g e - k e n n z e i c h n e t ,  daß eine Fläche einer Basisplatte (10) wenigstens teilweise mit einer kodierten Information (8) versehen wird, und daß danach die Basisplatte (10) mit einer für das bloße Auge erkennbaren Klarinformation zur Identifizierung des Kraftfahrzeugs in der Weise versehen wird, daß die Basisplatte (10) ein Informationsträger für die kodierte Information und gleichzeitig ein Nummernschild (2) bildet.

14. Verfahren zur Erzeugung eines Identifikationssystems für ein Kraftfahrzeug, d a d u r c h  g e - k e n n z e i c h n e t ,  daß zuerst ein Nummernschild (2) für ein Kraftfahrzeug erzeugt wird, welches eine zur Identifizierung des betreffenden Kraftfahrzeuges dienende, mit dem bloßen Auge erkennbare Klarinformation enthält, und daß danach eine dünne Folie auf das Nummernschild (2) aufgebracht wird, die eine kodierte Information (8) enthält, welche mit dem bloßen Auge nicht dekodierbar ist.

15. Verfahren nach Anspruch 13, d a d u r c h  g e - k e n n z e i c h n e t ,  daß die Fläche mit der kodierten Information (8) derart versehen wird, daß die zu kodierende Information in einen Rechner eingegeben wird, daß aus dieser Information gemäß einem gegebenen Programm ein Hologramm errechnet wird und daß dieses Hologramm danach in die Fläche der Basisplatte eingraviert wird.

16. Verfahren nach Anspruch 14, d a d u r c h
g e k e n n z e i c h n e t , daß die Fläche mit
der kodierten Information derart versehen wird,
daß die zu kodierende Information in einen Rechner
eingegeben wird, daß aus dieser Information gemäß
einem gegebenen Programm ein Hologramm errechnet
wird, und daß das Hologramm in die Fläche der
Folie eingraviert wird.

17. Verfahren nach Anspruch 15 oder 16, d a d u r c h
g e k e n n z e i c h n e t , daß die holografische
Information beim Einbringen in die Fläche zusätzlich
kodiert wird.

18. Gerät zur Erzeugung eines Identifikationssystems
für Kraftfahrzeuge, g e k e n n z e i c h n e t
d u r c h  ein Schreibwerkzeug (44) zum Einschreiben
eines Hologramms in eine Fläche, eine Steuereinrichtung (42) zum Steuern des Schreibwerkzeugs, einen
mit der Steuereinrichtung (42) verbundenen Fourier-
Prozessor (40) zum Errechnen des Hologramms, und
durch eine Eingabeeinrichtung (30, 32) zur Eingabe
einer zu kodierenden Information in den Prozessor (40).

19. Verfahren zur Wiedergabe einer in einem Identifikationssystem für Kraftfahrzeuge enthaltenen kodierten Information, die in einem zusätzlichen Informationsträger in Form eines Hologramms gespeichert ist,
d a d u r c h  g e k e n n z e i c h n e t , daß
das Hologramm (8) dieses zusätzlichen Informationsträgers (20a) mit Laserlicht bestrahlt wird, daß das
reflektierte Licht (60) von einem Sensor (62, 80) aufgenommen wird und daß dieses Licht von einem Bildwandler (62, 82) in ein visuell wahrnehmbares Bild
umgewandelt wird.

20. Gerät zur Wiedergabe einer in einem Identifikationssystem für Kraftfahrzeuge enthaltenen kodierten Information, die in einem zusätzlichen Informationsträger (2, 20a)    in Form eines Hologramms gespeichert ist, d a d u r c h   g e k e n n z e i c h - n e t ,  daß

1. ein Meßlaser (54) zum Bestrahlen des Hologramms (8) mit Laserlicht,

2. ein optisches System (56) zum Empfang des reflektierten Laserlichts,

3. ein System zur Durchführung einer umgekehrten Fourier-Transformation, und

4. ein Monitor zur visuellen Darstellung eines Bildes vorgesehen sind.

21. Gerät nach Anspruch 20, d a d u r c h   g e - k e n n z e i c h n e t , daß das Hologramm (8) aus einem Infrarot-Hologramm, der Meßlaser (54) aus einem Infrarot-Laser und das optische System (70) aus einer Infrarot-Linse besteht.

22. Gerät nach Anspruch 20 oder 21, d a d u r c h g e k e n n z e i c h n e t , daß das optische System (56) einen Bildwandler (62, 82) und das System zur Durchführung der umgekehrten Fourier-Transformation einen Fourier-Prozessor aufweist.

23. Gerät nach einem der Ansprüche 20 bis 22, d a - d u r c h   g e k e n n z e i c h n e t , daß der Meßlaser (54) mit einem Feldstecher verbunden ist.

24. Gerät nach Anspruch 21 oder nach Anspruch 21 und Anspruch 22 oder 23, d a d u r c h   g e k e n n - z e i c h n e t ,  daß der Meßlaser aus einem $CO_2$-Laser besteht.

0040839

1/3

FIG 1

FIG 2a

FIG 2b

FIG 2c

FIG 3a

FIG 3b

FIG 3c

FIG 4a

FIG 4b

FIG 4c

**FIG 5**

ABC-1234

2

**FIG 6**

ABC-1234

2a  20a  26

24

**FIG 7**

30  36

PACS

34

PUFFER  32

FOURIER PROCESSOR  40

STEUER = VORRICHTUNG  42

38

ABC-1234  2

Z y
X

44

8

2

**FIG 8**

56

POLIZEI

52

54

2

50

## FIG 9

50

ABC-1234

2

54

56

## FIG 10

74

70

60

66   64

62

ABC-1234

MONITOR        IR-WANDLER

72        56

IR-SICHTGERÄT

## FIG 11

PROCESSOR   IR-WANDLER    56

MONITOR                        60

ABC-1234

66

82        80

FELD AUS IR-SENSOREN